# EUROPEAN PATENT APPLICATION

(11) **EP 4 704 177 A1**
(43) Date of publication of application: **04.03.2026**
(21) Application number: 24797054.4
(22) Date of filing: 24.04.2024
(51) Int. Cl.: H01M 4/36, H01M 4/13, H01M 4/505, H01M 4/525, H01M 4/62

(54) **POSITIVE ELECTRODE ACTIVE MATERIAL AND SECONDARY BATTERY**

(30) Priority: 27.04.2023 JP 2023073823
(71) Applicant: PANASONIC INTELLECTUAL PROPERTY MANAGEMENT CO., LTD., Kadoma-shi, Osaka 571-0057 (JP)
(72) Inventor: KINTSU, Kohei, Kadoma-shi, Osaka 571-0057 (JP); KANAI, Toshinobu, Kadoma-shi, Osaka 571-0057 (JP)
(74) Representative: Novagraaf International SA
(86) International application number: PCT/JP2024/016042
(87) International publication number: WO 2024/225308

(57) **Abstract**

Provided is a positive electrode active material capable of suppressing decrease in the adhesion force between a positive electrode collector and a positive electrode mixture layer and decrease in a battery capacity. The positive electrode active material having pores is characterized in that: in a pore diameter distribution obtained by analyzing a nitrogen adsorption isotherm by the BJH method, a pore diameter is 30 nm or more and a pore volume has a peak of 0.003 cm3/g or more; and in a pore diameter distribution obtained by analyzing a nitrogen desorption isotherm by the BJH method, the pore volume of a peak in a region having a pore diameter of 5 nm or less is twice or more of the pore volume of a peak in a region having a pore diameter of more than 5 nm in a desorption side pore diameter distribution.

## Description

### TECHNICAL FIELD

The disclosure relates to a positive electrode active material and a secondary battery.

### BACKGROUND

In recent years, secondary batteries such as a lithium ion secondary battery have been widely used in applications requiring a high capacity, such as an in-vehicle application and a power storage application. Since a main constituent element of a positive electrode, i.e., a positive electrode active material, has a significant effect on the increase of, e.g., battery capacity, many studies have been conducted on the positive electrode active material.

For example, Patent Literature 1 discloses a positive electrode in which a positive electrode mixture layer containing a positive electrode active material composed of porous particles, which have an average pore size obtained in a pore distribution measurement by a mercury intrusion technique within a range greater than or equal to 0.1 and less than or equal to 1 µm and greater than or equal to 0.01 cm³/g of total volume of pores having a size of greater than or equal to 0.01 and less than or equal to 1 µm, and a binding material, is formed on a positive electrode current collector.

### CITATION LIST

### PATENT LITERATURE

Patent Literature 1: JP 2000-323142 A

### SUMMARY

In a case where a positive electrode active material has a large number of pores, a binding material enters the pores of the positive electrode active material during preparation of a positive electrode. As a result, the adhesion force (peeling strength) between a positive electrode current collector and a positive electrode mixture layer decreases. This is a problem. In this case, a larger amount of binding material is required, whereas the battery capacity may decrease. In contrast, in a case where a positive electrode active material has a small number of pores, a reactive area decreases. As a result, battery capacity decreases. This is a problem.

Then, the disclosure is directed to providing a positive electrode active material that can suppress a decrease of adhesion force between a positive electrode current collector and a positive electrode mixture layer, and suppress a decrease of battery capacity, and providing a secondary battery having the positive electrode active material.

An aspect of the disclosure is directed to a positive electrode active material having pores, wherein, in a pore-size distribution obtained by BJH analysis of a nitrogen adsorption isotherm, a peak having a pore volume of greater than or equal to 0.003 cm³/g is present at a pore size of greater than or equal to 30 nm; and, in a pore-size distribution obtained by BJH analysis of a nitrogen desorption isotherm, a peak of pore volume is present at a pore size of less than or equal to 5 nm.

An aspect of the disclosure is directed to a secondary battery having a positive electrode and a negative electrode, wherein the positive electrode has a positive electrode mixture layer having the positive electrode active material.

According to the disclosure, it is possible to suppress a decrease in the adhesion force between a positive electrode current collector and a positive electrode mixture layer, and suppress a decrease in battery capacity.

### BRIEF DESCRIPTION OF DRAWINGS

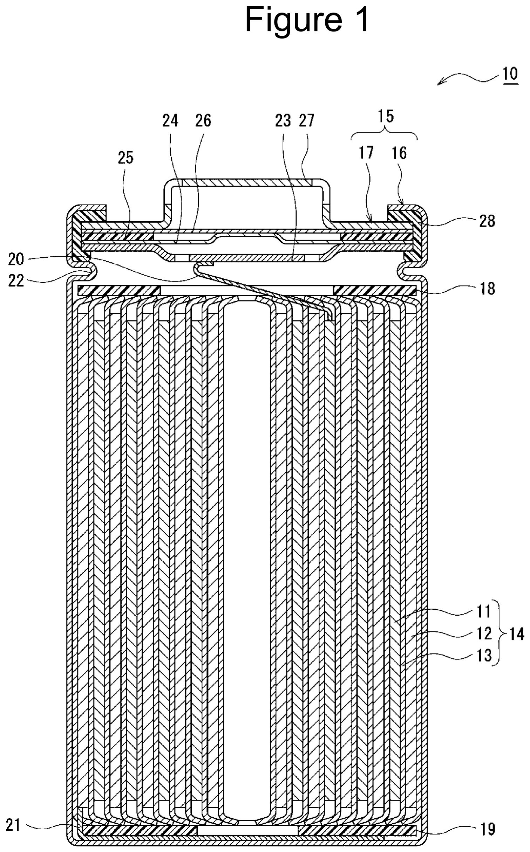

FIG. 1 is a sectional view of a secondary battery according to an embodiment.

### DESCRIPTION OF EMBODIMENTS

Hereinafter, embodiments of a secondary battery according to the disclosure will be described in detail with reference to the drawing.

FIG. 1 is a sectional view of a secondary battery according to an embodiment. The secondary battery 10 illustrated in FIG. 1 has a wound electrode assembly 14 formed by winding a positive electrode 11 and a negative electrode 12 with a separator 13 interposed between them, an electrolyte, insulating plates 18 and 19 disposed on the top and bottom of the electrode assembly 14, respectively, and a battery case 15 housing the above members. The battery case 15 is constituted of a cylindrical case body 16 with a bottom and a sealing assembly 17 closing an opening of the case body 16. Note that, in place of the wound electrode assembly 14, another-form electrode assembly, such as a stacked electrode assembly may be used, which is formed by alternately laminating positive electrodes and negative electrodes with a separator interposed between the electrodes. Examples of the battery case 15 include metal cases having a cylindrical shape, a square shape, a coin shape and a button shape, and resin cases (so-called laminate case) formed by laminating resin sheets.

The electrolyte has, for example, ion conductivity (for example, lithium ion conductivity). The electrolyte may be a liquid electrolyte (electrolytic solution) or a solid electrolyte.

The liquid electrolyte (electrolytic solution) contains, for example, a non-aqueous solvent and an electrolyte salt dissolved in a non-aqueous solvent. Examples of the non-aqueous solvent that is used include esters, ethers, nitriles, amides, and mixed solvents of greater than or equal to two of these. Examples of the non-aqueous solvent include ethylene carbonate (EC), ethyl methyl carbonate (EMC), dimethyl carbonate (DMC), diethyl carbonate (DEC), and mixed solvents of these. Examples of the non-aqueous solvent may include halogen-substituted solvents (for example, fluoroethylene carbonate) obtained by substituting at least a part of hydrogen atoms of these solvents with a halogen atom such as a fluorine atom. As the electrolyte salt, for example, a lithium salt such as LiPF₆ is used.

As the solid electrolyte, for example, a solid or gel polymer electrolyte, or an inorganic solid electrolyte, can be used. The polymer electrolyte contains, for example, a lithium salt and a matrix polymer or a non-aqueous solvent, a lithium salt, and a matrix polymer. As the matrix polymer, for example, a polymer material that turns into a gel when the polymer material absorbs a non-aqueous solvent, can be used. Examples of the polymer material include a fluororesin, an acrylic resin, and a polyether resin. Examples of the inorganic solid electrolyte that can be used include materials known in the technical field of, e.g., all-solid-state lithium ion secondary batteries (for example, oxide-based solid electrolytes, sulfide-based solid electrolytes, and halogen-based solid electrolytes). Note that, the electrolytes mentioned above as examples are non-aqueous electrolytes but the electrolyte is not limited to a non-aqueous electrolyte, and may be an aqueous electrolyte.

The case body 16 is, for example, a cylindrical metal container having a bottom. A gasket 28 is provided between the case body 16 and the sealing assembly 17 to keep the interior of the battery airtight. The case body 16 has a projecting portion 22, which is, e.g., a part of the side thereof projecting inward, for supporting the sealing assembly 17. The projecting portion 22 is preferably formed in a ring form along the circumference of the case body 16, and supports the sealing assembly 17 by an upper surface thereof.

The sealing assembly 17 has a laminate structure formed by stacking a filter 23, a lower vent member 24, an insulating member 25, an upper vent member 26, and a cap 27 sequentially from the side of the electrode assembly 14. Individual members constituting the sealing assembly 17 have, for example, a disk shape or a ring shape. The members except the insulating member 25 are mutually electrically connected. The lower vent member 24 and the upper vent member 26 are mutually connected at the center and the insulating member 25 is interposed between the circumferential portions of them. When the internal pressure of the secondary battery 10 increases with heat generated by, e.g., an internal short circuit, for example, the lower vent member 24 deforms in such a manner that it pushes up the upper vent member 26 toward the cap 27, and breaks the current pathway between the lower vent member 24 and the upper vent member 26. When the internal pressure further increases, the upper vent member 26 is broken, and gas is released through the opening of the cap 27.

In the secondary battery 10 illustrated in FIG. 1, a positive electrode lead 20 attached to the positive electrode 11 passes through a through-hole of the insulating plate 18 and extends toward the sealing assembly 17, whereas a negative electrode lead 21 attached to the negative electrode 12 passes along the outside of an insulating plate 19 and extends toward the bottom of the case body 16. The positive electrode lead 20 is connected to the lower surface of the filter 23, which is the bottom plate of the sealing assembly 17, by, e.g., welding, and the cap 27, which is the top plate of the sealing assembly 17 electrically connected to the filter 23, serves as a positive electrode terminal. The negative electrode lead 21 is connected to the inner surface of the bottom of the case body 16 by, e.g., welding, and the case body 16 serves as a negative electrode terminal.

Hereinafter, the positive electrode 11, the negative electrode 12, and the separator 13 will be described in detail.

### [Positive Electrode]

The positive electrode 11 has a positive electrode current collector and a positive electrode mixture layer disposed on the positive electrode current collector. The positive electrode mixture layer may be formed on both or either one of the surfaces of the positive electrode current collector. As the positive electrode current collector, for example, a foil of a metal such as aluminum that is stable in a potential range of the positive electrode 11, or a film having the metal disposed on its surface layer can be used. The positive electrode mixture layer contains, for example, a positive electrode active material, a binding material, and a conductive agent. The positive electrode 11 can be prepared, for example, by applying a positive electrode paste containing, e.g., a positive electrode active material, a binding material, and a conductive agent, onto a surface of the positive electrode current collector to obtain a coating film, and drying and then rolling the coating film.

Examples of the positive electrode active material of the embodiment include a lithium transition metal composite oxide. Examples of the metal element to be contained in the lithium transition metal composite oxide include Ni, Co, Mn, Al, B, Mg, Ti, V, Cr, Fe, Cu, Zn, Ga, Sr, Zr, Nb, In, Sn, Ta, and W. Of them, at least one of Ni, Co, and Mn is preferably contained. An example of a suitable lithium transition metal composite oxide is a composite oxide represented by a general formula: LiMO₂ (wherein M is Ni and X, X is a metal element except Ni, and the ratio of Ni is greater than or equal to 50 mol% and less than or equal to 95 mol% based on the total number of the moles of the metal element except Li). Examples of X in the above formula include Co, Mn, Al, B, Mg, Ti, V, Cr, Fe, Cu, Zn, Ga, Sr, Zr, Nb, In, Sn, Ta, and W.

The positive electrode active material of the embodiment has, in a pore-size distribution (hereinafter, referred to as the adsorption-side pore-size distribution), which is obtained by analyzing a nitrogen adsorption isotherm by the Barrett-Joyner-Halenda (BJH) method, a peak having a pore volume of greater than or equal to 0.003 cm³/g at a pore size of greater than or equal to 30 nm; and has, in a pore-size distribution (hereinafter, referred to as the desorption-side pore-size distribution), which is obtained by analyzing a nitrogen desorption isotherm by the BJH method, a pore volume of a peak present in a range having a pore size of less than or equal to 5 nm being greater than or equal to twice as large as the pore volume of a peak present in a range having a pore size of greater than 5 nm.

In a case where a peak having a pore volume of greater than or equal to 0.003 cm³/g is present at a pore size of greater than or equal to 30 nm in the adsorption-side pore-size distribution, a sufficient number of pores are present in the positive electrode active material. Thus, the reactive area of the positive electrode active material is sufficiently kept, and a decrease in battery capacity is suppressed. In a case where the pore volume of a peak present in a range having a pore size of less than or equal to 5 nm is greater than or equal to twice as large as the pore volume of a peak present in a range having a pore size of greater than 5 nm in the desorption-side pore-size distribution, since the size of the inlet portion of the pores formed in the positive electrode active material is small, the entry of the binding material into the pores of the positive electrode active material is suppressed during preparation of the positive electrode. Thus, even if the addition amount of the binding material is not increased, a decrease in adhesion force between the positive electrode current collector and the positive electrode mixture layer is suppressed. In addition, since the addition amount of the binding material is suppressed, a decrease of battery capacity can be suppressed.

The method for measuring the pore-size distribution is as follows. First, the positive electrode active material particles (5 g) are subjected to vacuum deaeration treatment at 105°C for 8 hours by a vacuum heating apparatus (BELSORP-vacII, manufactured by MicrotracBEL Corp.). After the treatment, the amount of nitrogen adsorbed by the positive electrode active material particles at a liquid nitrogen temperature (77 K) is measured by a measuring device (BELSORP-mini, manufactured by MicrotracBEL Corp.), and a nitrogen adsorption isotherm and a nitrogen desorption isotherm are prepared. The obtained nitrogen adsorption isotherm and nitrogen desorption isotherm are each analyzed by the BJH method to obtain a pore-size distribution in a range having a pore size of less than or equal to 200 nm. The BJH method is an analytic method performed based on a relational expression (Kelvin equation) between the pore size at which capillary condensation occurs and the relative thickness of nitrogen, assuming that the pore shape is cylindrical. The pore-size distribution is obtained by plotting data on the graph with pore size (nm, logarithmic scale) on the horizontal axis and logarithmic differentiation pore volume (cm³/g) on the vertical axis. In the disclosure, the pore volume in the pore-size distribution refers to a logarithmic differentiation pore volume.

In the positive electrode active material of the embodiment, in the adsorption-side pore-size distribution, It is satisfactory that a peak having a pore volume of greater than or equal to 0.003 cm³/g is present at a pore size of greater than or equal to 30 nm. However, for example, in view of further suppressing a decrease of battery capacity, it is preferable that a peak having a pore volume of greater than or equal to 0.004 cm³/g is present at a pore size of greater than or equal to 30 nm. The upper limit of the pore volume is not particularly limited, but is, for example, less than or equal to 0.01 cm³/g. In the adsorption-side pore-size distribution, the number of peaks of pore volume observed in the range of a pore size of greater than or equal to 30 nm may be one or more. In the adsorption-side pore-size distribution, the number of peaks having a pore volume of greater than or equal to 0.003 cm³/g observed in a range of a pore size of greater than or equal to 30 nm may be one or more. In the adsorption-side pore-size distribution, a peak of pore volume may be present at a pore size of less than 30 nm. Note that, in the embodiment, in the adsorption-side pore-size distribution, when a value of pore volume is greater than or equal to 0.002 cm³/g, it is defined that a peak is present (in other words, when a value of pore volume is less than 0.002 cm³/g, a peak is not present).

In the positive electrode active material of the embodiment, in the desorption-side pore-size distribution, it is satisfactory that the pore volume of the peak in the range where the pore size is less than or equal to 5 nm is greater than or equal to twice as large as the pore volume of the peak in the range where the pore size is greater than 5 nm. However, for example, in view of further suppressing a decrease in adhesion force between the positive electrode current collector and the positive electrode mixture layer, it is preferable that a peak having a pore volume of greater than or equal to 0.01 cm³/g is present at a pore size of less than or equal to 5 nm. The lower limit value of the pore size at the peak is not particularly limited, but is, for example, greater than or equal to 1 nm. In addition, in the desorption-side pore-size distribution, the peak of the pore volume observed in the range where the pore size is less than or equal to 5 nm may be one or more. In the desorption-side pore-size distribution, a peak of pore volume may be present or not when the pore size is greater than 5 nm. Note that, in the embodiment, it is defined that when the value of the pore volume is greater than or equal to 0.003 cm³/g, a peak is present in the desorption-side pore-size distribution (that is, when the value of the pore volume is less than 0.003 cm³/g, a peak is not present).

The positive electrode active material of the embodiment, for example, in view of further suppressing, e.g., a decrease in battery capacity, preferably has an average particle size of greater than or equal to 1 µm and less than or equal to 50 µm, and preferably has an average particle size of greater than or equal to 10 µm and less than or equal to 30 µm. The average particle size is a volume average particle size D50 at which the volume integrated value is 50% in a particle size distribution obtained by laser diffraction scattering.

The positive electrode active material of the embodiment, in view of further suppressing a decrease in battery capacity, preferably has a BET specific surface area of greater than or equal to 0.1 m²/g and less than or equal to 5 m²/g, and preferably greater than or equal to 0.2 m²/g and less than or equal to 3 m²/g. The BET specific surface area is measured from the nitrogen adsorption isotherm by the BET multipoint method. As the measuring device, for example, BELSORP-mini (manufactured by MicrotracBEL Corp.) can be used.

Hereinafter, a method for producing a positive electrode active material of the embodiment will be described. For example, a metal hydroxide or a metal oxide of, e.g., Ni, Co, Mn, or Al, is mixed with a lithium compound, and the mixture is baked. Examples of the lithium compound include Li₂CO₃ and LiOH. A metal hydroxide or metal oxide and a lithium compound are mixed in a molar ratio of the metal element Me and Li of, for example, greater than or equal to 1: 0.95 and less than or equal to 1: 1.15, and preferably greater than or equal to 1: 1.05 and less than or equal to 1: 1.15. In the baking of the mixture, for example, the temperature is raised to a predetermined temperature of greater than or equal to 500°C and less than or equal to 800°C at a rate of temperature rise of greater than or equal to 0.2 and less than or equal to 5.5°C/min under an oxygen gas stream. The retention time after the temperature is raised to the predetermined temperature is preferably set at greater than or equal to 2 and less than or equal to 4 hours. The baked mixture is cooled to room temperature at a predetermined rate of temperature decrease under, e.g., an oxygen-gas stream. In the adsorption-side pore-size distribution and the desorption-side pore-size distribution, in order to obtain the positive electrode active material having a peak as mentioned above, it is important to set the rate of temperature decrease during cooling. The rate of temperature decrease is appropriately set, for example, in accordance with the composition of elements constituting the positive electrode active material at less than or equal to 1.2°C/min.

The positive electrode mixture layer may contain a positive electrode active material not having a peak as mentioned above in the adsorption-side pore-size distribution and the desorption-side pore-size distribution as long as the effect of the embodiment is not impaired. The content of the positive electrode active material in the embodiment is, for example, preferably greater than or equal to 90 mass%, more preferably greater than or equal to 95 mass% and still more preferably 100 mass% based on the total mass of the positive electrode active materials.

Examples of the conductive agent contained in the positive electrode mixture layer include carbon materials such as carbon black, acetylene black, Ketjenblack, graphite, and carbon nanotubes.

Examples of the binding material contained in the positive electrode mixture layer include fluororesins such as polytetrafluoroethylene (PTFE) and polyvinylidene fluoride (PVdF), polyacrylonitrile (PAN), polyimide, acrylic resins, polyolefins, styrene-butadiene rubber (SBR), carboxymethyl cellulose (CMC), a cellulose derivative such as a salt of CMC, and polyethylene oxide (PEO).

The content of the binding material is, for example, in view of further suppressing a decrease of battery capacity, preferably less than or equal to 0.60 mass% based on the mass of the positive electrode active material. Since the positive electrode mixture layer contains the positive electrode active material according to the embodiment, even if the content of the binding material is mentioned as above, a decrease in adhesion force between the positive electrode mixture layer and the positive electrode current collector is suppressed.

The weight average molecular weight of the binding material is, for example, preferably greater than or equal to 1 million in view of further suppressing a decrease in adhesion force between the positive electrode mixture layer and the positive electrode current collector. The weight average molecular weight is satisfactory if it is measured by a general molecular weight measurement method, and more specifically, is a value measured by gel permeation chromatography (GPC).

### [Negative Electrode]

The negative electrode 12 includes a negative electrode current collector and a negative electrode mixture layer disposed on the negative electrode current collector. The negative electrode mixture layer may be formed on both or either one of the surfaces of the negative electrode current collector As the negative electrode current collector, for example, a foil of a metal such as copper that is stable in a potential range of the negative electrode 12, or a film having the metal disposed on its surface layer can be used. The negative electrode mixture layer contains, for example, a negative electrode active material and a binding material. The negative electrode 12 can be prepared, for example, by applying a negative electrode paste containing a negative electrode active material and a binding material onto a surface of the negative electrode current collector to obtain a coating film, drying and then rolling the coating film.

Examples of the negative electrode active material include materials capable of reversibly occluding and releasing a lithium ion, such as carbon materials including natural graphite and artificial graphite, metals such as Si and Sn, and alloys or oxides thereof. Examples of the binding material include the same as those mentioned in the case of the positive electrode 11. The negative electrode mixture layer may contain a conductive agent. Examples of the conductive agent include the same as those mentioned in the case of the positive electrode 11.

### [Separator]

As the separator 13, for example, a porous sheet having ion permeability and insulating properties is used. Examples of the porous sheet include such as microporous thin films, woven fabrics, and nonwoven fabrics. As a material of the separator 13, polyolefin such as polyethylene and polypropylene, and cellulose are suitable. The separator 13 may have either a single-layered structure or a multi-layered structure. On the surface of the separator, for example, a heat-resistant layer may be formed.

### EXAMPLES

Hereinafter, the disclosure will be further described with reference to Examples, but the disclosure is not limited to these Examples.

### <Example 1>

### [Preparation of Negative Electrode]

A negative electrode mixture slurry was prepared by mixing 100 parts by mass of graphite powder, 1 part by mass of carboxymethylcellulose sodium (CMC-Na), and 1 part by mass of a dispersion of styrene-butadiene rubber (SBR), and adding an appropriate amount of water thereto. Subsequently, the negative electrode mixture slurry was applied to both surfaces of a copper foil having a thickness of 8 µm to obtain a coating film, which was then dried. Then, the coating film was rolled by a roller to prepare a negative electrode.

### [Preparation of Positive Electrode]

A lithium transition metal composite oxide represented by the composition formula: LiNi_{0.9}Co_{0.05}Al_{0.05}O₂, having a peak having a pore volume of 0.0042 cm³/g at a pore size of 38 nm in the adsorption-side pore-size distribution, and having the pore volume of the peak at a pore size of less than or equal to 5 nm being greater than or equal to twice as large as the pore volume of a peak present in the range of a pore size of greater than 5 nm in the desorption-side pore-size distribution, was used as a positive electrode active material.

A positive electrode mixture slurry was prepared by mixing 100 parts by mass of the positive electrode active material, 1 part by mass of acetylene black (AB), and 0.6 parts by mass of a binding material, polyvinylidene fluoride (PVDF), and adding an appropriate amount of N-methyl-2-pyrrolidone (NMP) thereto. As the binding material, polyvinylidene fluoride (PVDF) having a weight average molecular weight of 1.2 million was used. Subsequently, the positive electrode mixture slurry was applied to both surfaces of an aluminum foil having a thickness of 15 µm to obtain a coating film, which was then dried. Subsequently, the coating film was rolled by a roller to prepare a positive electrode.

### [Preparation of Non-Aqueous Electrolyte]

A non-aqueous electrolyte was prepared by adding 5 parts by mass of vinylene carbonate (VC) to 100 parts by mass of a mixed solvent obtained by blending ethylene carbonate (EC) and dimethyl carbonate (DMC) at a volume ratio of 3: 7, and dissolving lithium hexafluorophosphate (LiPF₆) at a concentration of 1.5 mol/liter thereto.

### [Production of Secondary Battery]

A positive electrode lead was attached to the positive electrode, whereas a negative electrode lead was attached to the negative electrode. The positive electrode and the negative electrode were wound with the separator interposed therebetween to obtain a winding-type electrode assembly. Insulating plates were respectively arranged above and below the electrode assembly, and the electrode assembly was housed in a case body. The negative electrode lead was attached to the bottom of a case body by welding, and the positive electrode lead was attached to a sealing assembly by welding After the non-aqueous electrolyte was injected into the case body, the opening of the case body was sealed with the sealing assembly via a gasket to prepare a secondary battery.

### <Example 2>

A secondary battery was prepared in the same manner as in Example 1 except that, in preparation for the positive electrode, PVDF having a weight average molecular weight of 0.8 million was used as the binding material

### <Example 3>

A secondary battery was prepared in the same manner as in Example 1 except that, in preparation for the positive electrode, the amount of the binding material was set at 0.8 parts by mass.

### <Example 4>

A secondary battery was prepared in the same manner as in Example 1, except that, in preparation for the positive electrode, a lithium transition metal composite oxide represented by the composition formula: LiNi_{0.9}Co_{0.05}Al_{0.05}O₂, having a peak having a pore volume of 0.0031 cm³/g at a pore size of 36 nm in the adsorption-side pore-size distribution, and having the pore volume of the peak present in the range of a pore size of less than or equal to 5 nm being greater than or equal to twice as large as the pore volume of a peak present in the range of a pore size of greater than 5 nm, in the desorption-side pore-size distribution, was used as a positive electrode active material; and except that the amount of the binding material was set at 0.8 parts by mass.

### <Comparative Example 1>

A secondary battery was prepared in the same manner as in Example 1 except that, in preparation for the positive electrode, a lithium transition metal composite oxide represented by the composition formula: LiNi_{0.9}Co_{0.05}Mn_{0.05}O₂, having a peak having a pore volume of 0.0046 cm³/g at a pore size of 41 nm in the adsorption-side pore-size distribution, and not having a peak of pore volume at a pore size of less than or equal to 5 nm but having a peak of pore volume at a pore size of 10.5 nm in the desorption-side pore-size distribution, was used as the positive electrode active material.

### <Comparative Example 2>

A secondary battery was prepared in the same manner as in Example 1 except that, in preparation for the positive electrode, a lithium transition metal composite oxide represented by the composition formula: LiNi_{0.9}Co_{0.05}Mn_{0.05}O₂, not having a peak of pore volume at a pore size of greater than or equal to 30 nm but having a peak having a pore volume of 0.0021 cm³/g at a pore size of 15 nm in the adsorption-side pore-size distribution, having the pore volume of a peak present in the range of a pore size of less than or equal to 5 nm being greater than or equal to twice as large as the pore volume of a peak present in the range of a pore size of greater than 5 nm, in the desorption-side pore-size distribution, was used as a positive electrode active material.

### <Comparative Example 3>

A secondary battery was prepared in the same manner as in Example 1 except that, in preparation for the positive electrode, a lithium transition metal composite oxide represented by the composition formula: LiNi_{0.9}Co_{0.05}Mn_{0.05}O₂, having a peak having a pore volume of 0.0031 cm³/g at a pore size of 40 nm in the adsorption-side pore-size distribution, and not having a peak of pore volume at a pore size of less than or equal to 5 nm but having a peak of pore volume at a pore size of 8.0 nm in the desorption-side pore-size distribution, was used as a positive electrode active material, and except that the amount of the binding material was set at 83 parts by mass.

### [Evaluation of Battery Capacity]

The test cell in each of Examples and Comparative Examples was charged at a constant current of 0.5 C under a temperature environment of 25°C until the battery voltage reached 4.2 V, and then charged at a constant voltage of 4.2 V until the current value reached 0.05 C. Thereafter, the battery was discharged at a constant current of 0.2 C until the battery voltage reached 2.5 V. The discharge capacity at this time was obtained as a battery capacity. The results are summarized in Table 1. In Table 1, the battery capacity of Example 1 is used as a reference (100), and the battery capacities of Examples and Comparative Examples are shown as relative values.

### [Peeling Strength Test]

A positive electrode mixture layer surface of a positive electrode of 100 mm × 25 mm in size was attached onto a 120 mm × 30 mm acrylic plate with a double-sided tape (NYSTAC NW-20 manufactured by Nichiban Co., Ltd.) interposed therebetween. Peeling at 90° was performed at a measurement temperature of 25°C and a tensile speed of 50 mm/min by a small desktop testing machine (FGS-TV and FGP-5) manufactured by Nippon Densan Shinpo Co., Ltd., to measure the peeling strength between a positive electrode mixture layer and a positive electrode current collector (aluminum foil). The results are shown in Table 1. Table 1 shows relative peeling strengths of Examples and Comparative Examples based on the peeling strength of Example 1 as a reference (100).

**[Table 1]**

| | Peak of adsorption-side pore-size distribution | | Peak of desorption-side pore-size distribution | Binding material | | Evaluation | |
|---|---|---|---|---|---|---|---|
| | Pore volume (cm³/g) | Pore size (nm) | Pore size (nm) | Content relative to active material (wt%) | Weight average molecular weight | Peeling strength | Battery capacity |
| Example 1 | 0.0042 | 38 | Less than or equal to 5.0 | 0.6 | 1.2 million | 100 | 100 |
| Example 2 | 0.0042 | 38 | Less than or equal to 5.0 | 0.6 | 0.8 million | 83 | 100.2 |
| Example 3 | 0.0042 | 38 | Less than or equal to 5.0 | 0.8 | 1.2 million | 118 | 99.7 |
| Example 4 | 0.0031 | 36 | Less than or equal to 5.0 | 0.8 | 1.2 million | 124 | 99.4 |
| Comparative Example 1 | 0.0046 | 41 | 10.5 | 0.6 | 1.2 million | 71 | 100.8 |
| Comparative Example 2 | 0.0021 | 15 | Less than or equal to 5.0 | 0.6 | 1.2 million | 108 | 98.2 |
| Comparative Example 3 | 0.0031 | 40 | 8.0 | 83 | 1.2 million | 62 | 104 |

In all of Examples 1, 3, and 4, the battery capacity and the peeling strength were high. In Example 2, since the binding material having a low weight average molecular weight was used, the peeling strength was low but higher than those of Comparative Examples. In contrast, Comparative Examples 1 and 3 had considerably low peeling strength compared to Example 1, and Comparative Example 2 had low battery capacity compared to Example 1. From these results, it can be said that it is possible to suppress a decrease in adhesion force between the positive electrode current collector and the positive electrode mixture layer and a decrease in battery capacity by using the positive electrode active material having a peak having a pore volume of greater than or equal to 0.003 cm³/g at a pore size of greater than or equal to 30 nm in the adsorption-side pore-size distribution, and having the pore volume of a peak present in the range of a pore size of less than or equal to 5 nm being greater than or equal to twice as large as the pore volume of a peak present in the range of a pore size of greater than 5 nm in the desorption-side pore-size distribution.

### REFERENCE SIGNS LIST

- 10: Secondary battery
- 11: Positive electrode
- 12: Negative electrode
- 13: Separator
- 14: Electrode assembly
- 15: Battery case
- 16: Case body
- 17: Sealing assembly
- 18, 19: Insulating plate
- 20: Positive electrode lead
- 21: Negative electrode lead
- 22: Projecting portion
- 23: Filter
- 24: Lower vent member
- 25: Insulating member
- 26: Upper vent member
- 27: Cap
- 28: Gasket

## Claims

1. A positive electrode active material having pores wherein,
in a pore-size distribution obtained by BJH analysis of a nitrogen adsorption isotherm, a peak having a pore volume of greater than or equal to 0.003 cm³/g is present at a pore size of greater than or equal to 30 nm, and
in a pore-size distribution obtained by BJH analysis of a nitrogen desorption isotherm, a pore volume of a peak present in a range having a pore size of less than or equal to 5 nm is greater than or equal to twice as large as a pore volume of a peak present in a range having a pore size of greater than 5 nm.

2. A secondary battery having a positive electrode and a negative electrode, wherein
the positive electrode contains a positive electrode mixture layer having the positive electrode active material according to claim 1.

3. The secondary battery according to claim 2, wherein the positive electrode mixture layer has a binding material, and
a content of the binding material is less than or equal to 0.60 mass% based on a mass of the positive electrode active material.

4. The secondary battery according to claim 3, wherein a weight average molecular weight of the binding material is greater than or equal to 1 million.
